Europäisches Patentamt

European Patent Office

Office européen des brevets

(11) Veröffentlichungsnummer: **0 180 823**
**B1**

# EUROPÄISCHE PATENTSCHRIFT

(45) Veröffentlichungstag der Patentschrift:
**20.12.89**

(21) Anmeldenummer: **85113100.3**

(22) Anmeldetag: **16.10.85**

(51) Int. Cl.⁴: **B 21 D 28/12**, B 23 Q 3/155

(54) Werkzeugwechselvorrichtung an einer Stanz- oder Nibbelmaschine.

(30) Priorität: **03.11.84 DE 3440224**

(43) Veröffentlichungstag der Anmeldung:
**14.05.86 Patentblatt 86/20**

(45) Bekanntmachung des Hinweises auf die Patenterteilung:
**20.12.89 Patentblatt 89/51**

(84) Benannte Vertragsstaaten:
**CH FR GB IT LI**

(56) Entgegenhaltungen:
**DE-A- 2 635 003**
**DE-B- 2 044 183**
**FR-A- 2 066 940**
**US-A- 3 745 646**

(73) Patentinhaber: **Trumpf GmbH & Co,**
**Postfach 1320 Johann-Maus-Strasse 2,**
**D-7257 Ditzingen (DE)**

(72) Erfinder: **Klingel, Hans, Dipl.-Ing. (FH), Teckstrasse 91,**
**D-7141 Möglingen (DE)**

(74) Vertreter: **Patentanwälte Dipl.-Ing. B. Schmid Dr.-Ing.**
**G.A. Bim Dipl.-Ing. H. Quarder, Falbenhennenstrasse 17,**
**D-7000 Stuttgart 1 (DE)**

ACTORUM AG

## Beschreibung

Die Erfindung bezieht sich auf eine Werkzeugwechselvorrichtung an einer Stanz- oder Nibbelmaschine mit zwei drehbaren Magazinen zur Aufnahme jeweils wenigstens zweier wahlweise benutzbarer gleichartiger Werkzeugteile und mit einer Übergabeeinrichtung zum Ein- und Auswechseln eines Werkzeugs in die bzw. aus der Werkzeugaufnahme der Maschine, wobei die Werkzeug-Magazine um horizontale geometrische Achsen drehbar sind und wobei sich außerdem die beiden Werkzeugteile in ihrer Entnahmestellung in den Werkzeug-Magazinen in einem gegenseitigen Abstand befinden, der etwa ihrem Höhenabstand in ihrer Auswechselstellung in der Werkzeugaufnahme der Maschine entspricht. Eine derartige Werkzeugwechselvorrichtung ist durch die DE-A-2 635 003 bekanntgeworden. Das eine Magazin dieser Werkzeugwechselvorrichtung befindet sich oberhalb der Werkstückebene und das zweite unterhalb der Werkstückebene. Dabei nimmt das obere Werkzeugmagazin die Stanzstempel und gegebenenfalls auch die Abstreifer auf, während im unteren Werkzeugmagazin die zugehörigen Matrizen sind. Diese Anordnung der beiden Magazine macht zwar ein problemloses Übergeben der Werkzeugteile eines wenigstens zweiteiligen Stanz- oder Nibbelwerkzeugs an die Werkzeugaufnahme der Stanz- oder Nibbelmaschine bzw. das Herausnehmen aus dieser Maschine möglich, jedoch hat diese Wechselvorrichtung insgesamt einen ganz erheblichen Platzbedarf, weil der Raum vor der Werkzeugmaschine sowohl oberhalb als auch unterhalb der Werkstückebene von dieser Wechselvorrichtung eingenommen wird. Dieser Raum steht somit zu anderen Zwecken nicht mehr zur Verfügung.

Die Aufgabe der Erfindung besteht infolgedessen darin, eine Werkzeugwechselvorrichtung der eingangs beschriebenen Art so weiterzubilden, daß der Platzbedarf möglichst gering ist und somit der Zugang zur Werkstückebene verbessert wird.

Zur Lösung dieser Aufgabe wird erfindungsgemäß vorgeschlagen, daß die Werkzeugwechselvorrichtung nach dem Oberbegriff des Anspruchs 1 gemäß dem kennzeichnenden Teil dieses Anspruchs ausgebildet ist. Durch die Anordnung beider Werkzeug-Magazine bzw. des Doppelmagazins entweder unterhalb oder oberhalb der Werkstückebene wird der Platz oberhalb bzw. unterhalb der Werkstückebene jeweils freigehalten und kann somit anderweitig genutzt werden. Ein geringer Platzbedarf ergibt sich dadurch, daß das Doppelmagazin bzw. beide Werkzeug-Magazine in bekannter Weise um horizontale geometrische Achsen drehbar sind, d.h. sie sich bei relativ geringer Ausdehnung in horizontaler Richtung vorwiegend in einer vertikalen Ebene erstrecken. Diese Ausbildung und Anordnung ermöglicht auch eine Vereinfachung des Antriebs und der Übergabeeinrichtung. Im übrigen müssen die WerkzeugMagazine bzw. das Doppelmagazin nicht notwendigerweise eine ausgeprägte Drehachse oder -welle besitzen, weswegen im Anspruch 1 lediglich ihre geometrischen Achsen angesprochen sind.

Weil sich der Abstand der in den WerkzeugMagazinen bzw. im Doppelmagazin befindlichen Werkzeugteile in Entnahmestellung, also vor ihrer Übergabe an die Werkzeugaufnahme der Maschine, dem Höhenabstand entspricht, den sie beim Ein- und Auswechseln in die bzw. aus der Werkzeugaufnahme der Maschine einnehmen, läßt sich auch bei dieser Werkzeugwechselvorrichtung die Übergabe mit einer relativ einfach ausgebildeten Übergabeeinrichtung problemlos durchführen. Dasselbe gilt auch für den radialen Seitenabstand der Werkzeugteile des Doppelmagazins.

Nach dem Einriegeln der Werkzeugteile in die Werkzeugaufnahme der Maschine kann sich der gegenseitige Höhenabstand durch eine eventuell notwendige Einriegelbewegung noch geringfügig ändern. Die Verriegelung kann beispielsweise mit Hilfe von Spannkeilen in bekannter Weise vorgenommen werden.

Die koaxiale Anordnung der geometrischen Achsen der Magazinachsen oder -wellen ermöglicht ihre besonders zweckmäßige Ausbildung. Auch antriebsmäßig kann dies zu einer Vereinfachung der Konstruktion führen. Sofern die Stanzoder Nibbelmaschine keine Besonderheiten aufweist, handelt es sich bei den kreis- oder kreisbogenförmigen Bewegungsbahnen der in den Werkzeug-Magazinen bzw. im Doppelmagazin befindlichen Werkzeugteile um kreisförmige oder, bei weniger als 360°-Drehung, um kreisbogenförmige Bewegungsbahnen. Andererseits kann aber trotz koaxialer geometrischer Achsen der beiden Werkzeug-Magazine die Bewegungsbahn von der Kreis- oder Kreisbogenform abweichen, wenn dies eine Besonderheit der Stanzmaschine erfordert oder vorteilhaft erscheinen läßt.

Ein besonderer Vorteil der neuen Werkzeugwechselvorrichtung liegt darin, daß das Werkzeug-Magazin mit der größeren Bewegungsbahn bzw. das Doppelmagazin die Gestalt einer Kreisscheibe mit abgetrenntem Kreisabschnitt aufweist, wobei sich dessen geradlinige Begrenzung bei paralleler Lage zu der Werkstückebene an derselben Seite der Werkstückebene befindet wie die geometrischen Achsen der beiden Werkzeugmagazine bzw. die Achse des Doppelmagazins oder bündig mit dieser verläuft. Dies ermöglicht die Anordnung der Werkzeug-Magazine bzw. des Doppelmagazins in unmittelbarer Nähe der Werkzeugmaschine ohne Beschränkung der maximal zu bearbeitenden Werkstück- bzw. Tafelgröße. Während des Stanzens befindet sich auch dieses, die Werkstückebene während des Werkzeugwechsels durchquerende Werkzeug-Magazin bzw. der äußere Magazinbereich vollständig unterhalb oder oberhalb der Werkstückebene, so daß das zu bearbeitende Werkstück ohne Beeinträchtigung über das bzw. die beiden WerkzeugMagazine hinweg oder unter diesen hindurch verschoben werden kann. Theoretisch gibt es zwei parallele Lagen der geradlinigen Begrenzung gegenüber der Werkstückebene. Von Bedeutung ist in diesem Zusammenhang jedoch nur diejenige, bei welcher sich die geradlinige Begrenzung nahe der Werkstückebene befindet oder bündig damit verläuft. Diese Lage kann man durch eine entsprechende Verrastvorrichtung sichern, damit sie während des Stanzens sicher beibehalten wird. Wenn sich die Werkzeug-Magazine bzw. der äußere Magazinbereich nicht unterhalb sondern oberhalb der Werkstückebene befinden, so hat dies zur Folge, daß sich dann auch die geradlinige Begrenzung bei paralleler Lage zur Werkstückebene oberhalb letzterer befindet oder bündig damit verläuft.

Die Werkzeug-Magazine bzw. das Doppelmagazin befinden sich in sehr vorteilhafter Weise in Längsrichtung der Maschine gesehen vor letzterer. Um kurze Übergabewege zu bekommen, holt man die Werkzeug-Magazine bzw. das Doppelmagazin möglichst nahe an die Stanzmaschine heran. Aus demselben Grunde ist auch der gegenseitige Abstand der Werkzeug-Magazine zweckmäßigerweise klein zu wählen, was zudem den Vorteil geringen Platzbedarfs hat. Andererseits bedingt aber die Anordnung der Werkzeug-Magazine hintereinander, d.h. in unterschiedlichem Abstand von der Stanzmaschine, nicht notwendigerweise unterschiedlich lange Übergabestrecken, obwohl die verschiedenen Teile des Stanzwerkzeugs in Gebrauchslage unmittelbar übereinander montiert sind. Gleich lange Übergabestrecken kann man durch entsprechende Formgebung und Ausbildung der Werkzeug-Magazine erreichen.

Die scheiben- oder radförmigen Werkzeug-Magazine weisen in weiterer Ausgestaltung der Erfindung eine gemeinsame Antriebswelle auf.

Weil beispielsweise bei zwei Werkzeug-Magazinen die Halterungen für die Werkzeugteile in aller Regel am Randbereich der Werkzeug-Magazine angebracht sind, können sich bei einer derartig «abgeschnittenen» Scheibe für die Werkzeugteile mit der größeren Bewegungsbahn die Werkzeugteile auch nur auf einem Teilumfang von beispielsweise ca. 270° befinden. In diesem Zusammenhang sieht eine zweckmäßige Weiterbildung der Erfindung vor, daß der Winkelabstand benachbarter Werkzeugteile bei beiden Werkzeugmagazinen bzw. am Doppelmagazin identisch ist. Wenn also das «größere» Werkzeug-Magazin nur auf einem Umfang von ca. 270° Werkzeugteile trägt, so bedeutet dies, daß auch beim «kleineren» Werkzeug-Magazin bzw. innerem Magazinbereich die Werkzeugteile nur auf einem Teilumfang bzw. auch nur auf ca. 270° angeordnet sind, obwohl es bei zwei Werkzeug-Magazinen als volle Kreisscheibe ausgebildet sein kann. Im übrigen ist einer Kreisscheibe ein Rad mit Speichen gleichwertig.

Eine andere Ausgestaltung der Erfindung ist gekennzeichnet durch eine Vorrichtung zum gesteuerten Rückdrehen der Werkzeug-Magazine bzw. des Doppelmagazins nach dem Werkzeugwechsel in eine Ausgangsstellung, in welcher die geradlinige Begrenzung des Werkzeug-Magazins mit der größeren Bewegungsbahn der Werkstückebene am nächsten ist und parallel dazu verläuft. Insbesondere wenn es sich um eine Maschine mit Programmsteuerung und programmgesteuertem Werkzeugwechsel handelt, kann man mit relativ geringem Mehraufwand des Programms erreichen, daß über diese Vorrichtung das «größere» Werkzeug-Magazin bzw. das Doppelmagazin nach erfolgtem Werkzeugwechsel in die «Ausgangsstellung» zurückgedreht wird, in welcher die Werkstückebene auch über das bzw. die Werkzeug-Magazine hinaus freigegeben ist. Auch ein Ein- und Ausriegeln in der Ausgangsstellung kann man durch dieses Programm steuern. Hierbei ist es vorteilhaft, wenn trotz einer beispielsweise 270°-Bestückung die Werkzeug-Magazine bzw. des Doppelmagazins um volle 360° gedreht werden können, so daß man beim Rückführen in die Ausgangsstellung den jeweils kürzesten Weg wählen kann. Dasselbe gilt auch beim Übergang der Ausgangs- in eine Übergabestellung.

Dies setzt jedoch einen Antrieb des bzw. der Werkzeug-Magazine in beiden Drehrichtungen voraus.

Eine weitere Variante der Erfindung kennzeichnet sich dadurch, daß die Übergabevorrichtung eine geradlinige Wechselbewegung ausführt und sie insbesondere wenigstens einen Hydraulik- oder Pneumatikzylinder aufweist. Der Antrieb mittels eines derartigen Arbeitszylinders ist problemlos einfach und preisgünstig.

Die zweiteilige Ausbildung des Werkzeugs erfordert bei zwei Magazinen an sich zwei Arbeitszylinder. Der Werkzeugwechsel kann jedoch auch mit einem einzigen Arbeitszylinder durchgeführt werden, wenn gemäß einer weiteren Ausbildung der Erfindung alle Teile eines Stanzwerkzeugs gemeinsam mittels eines bzw. je eines Halters der Übergabevorrichtung ein- und ausgewechselt werden. Der Halter, beispielsweise eine Wechselkassette, entnimmt vorzugsweise gleichzeitig aus den Werkzeug-Magazinen bzw. dem Doppelmagazin die zusammengehörigen Werkzeugteile eines zwei- oder mehrteiligen Stanzwerkzeugs und übergibt sie dann in einer einzigen Wechselbewegung an die Stanzmaschine und umgekehrt. Die Werkzeugteile nehmen in dieser Kassette od. dgl. die gleiche gegenseitige Höhenlage ein, wie in ihrer Einwechselstellung in der Stanzmaschine bzw. in den Werkzeug-Magazinen bzw. dem Doppelmagazin. In letzterem bzw. letzteren dürfen sie demnach in Übergaberichtung seitlich nicht versetzt sein. Im übrigen gelten diese Ausführungen sinngemäß beim Zurückwechseln eines Werkzeugs von der Werkzeugaufnahme der Stanzmaschine in das bzw. die Werkzeug-Magazine. Die Verwendung eines derartigen Halters oder einer Kassette trägt zum beschleunigten und auch problemlosen Werkzeugwechsel bei.

Eine andere Ausführungsform der Erfindung besteht darin, daß bei zwei Werkzeug-Magazinen wenigstens das Werkzeug-Magazin mit der größeren Bewegungsbahn auswechselbar ausgebildet ist. Dies ermöglicht ein komplettes Werkzeug-Magazin gegen ein anderes, mittlerweile mit neuen Werkzeugteilen gefülltes Magazin auszutauschen. Gleichwertig ist eine Ausführungsform, bei welcher ein Teil dieses Werkzeug-Magazins an Ort und Stelle verbleibt und das aufgrund seiner zweiteiligen Ausbildung ein Abnehmen und Austauschen des die Werkzeugteile unmittelbar tragenden Magazinteils gestattet. An sich ist es vorteilhaft, wenn beide Werkzeug-Magazine bzw. das Doppelmagazin auf diese Weise gegen andere ausgetauscht werden können. In Sonderfällen kann es aber zweckmäßig oder auch notwendig sein, daß lediglich ein Werkzeug-Magazin, insbesondere das «größere», in der geschilderten Weise auswechselbar bzw. zweiteilig ist.

Dieses Auswechseln eines kompletten Werkzeug-Magazins kann in sehr vorteilhafter Weise auch dadurch erfolgen, daß wenigstens das Werkzeug-Magazin mit der größeren Bewegungsbahn an einer fahrbaren Vorrichtung drehbar montiert ist und infolgedessen zusammen mit dieser Vorrichtung an die Stanzmaschine herangefahren oder zum Wechseln weggefahren wird. Weil der Werkzeugwechsel in Verbindung mit einer Übergabeeinrichtung erfolgt, muß bei derart fahrbaren Werkzeug-Magazinen dafür gesorgt werden, daß sie gegenüber dieser Übergabeeinrichtung und damit auch gegenüber der letztere aufweisenden Stanzmaschine eine stets gleiche Lage einnehmen. Zweckmäßigerweise erreicht man diese durch Ankuppeln und Verriegeln.

Ein Sonderfall, der zur Folge hat, daß lediglich eines der Werkzeug-Magazine bzw. nur das größere auswechselbar oder fahrbar ausgeführt wird, kann dann vorliegen, wenn gemäß einer anderen Variante der Erfindung das Werkzeug-Magazin mit der kleineren Bewegungsbahn in einer durch die mit der Arbeitsbewegung des Stanzstempels definierten Geraden gelegten Ebene drehbar und jedes Werkzeugteil während des Stanzens daran gehalten ist. Dieses Werkzeugteil wird nach Ausgebrauch lediglich durch Drehen des Magazins aus dem Arbeitsbereich herausgenommen und das nächste kommt dann nach einer vorgegebenen Winkeldrehung automatisch in den Arbeitsbereich, wobei gegebenenfalls noch ein Ein- bzw. Ausriegelvorgang stattfinden kann, um die Arbeitsstellung zu sichern. Eine Übergabeeinrichtung wird für dieses Werkzeugteil demnach nicht benötigt.

Eine vorteilhafte Weiterbildung der Erfindung sieht vor, daß das Werkzeug-Magazin mit der größeren Bewegungsbahn bzw. das Doppelmagazin eine auf die geradlinige Begrenzung aufgesetzte Platte, ein Gitter od. dgl. aufweist, deren Ebene sich parallel zur geometrischen Drehachse des Werkzeugs-Magazins erstreckt und die in der Ausgangsstellung des Werkzeug-Magazins etwa in Verlängerung eines Werkzeugtisches od. dgl. oder etwa in der Höhe der Matrizenauflage der Stanz- oder Nibbelmaschine verläuft. Nach dem Werkzeugwechsel und dem Zurückdrehen des Werkzeug-Magazins in seine Ausgangsstellung bildet die aufgesetzte Platte od. dgl. eine zusätzliche Abstützung für die zu bearbeitenden Bleche. Außerdem verhindert sie, daß sich bei stark ausgestanzten Blechen und gegebenenfalls etwas durchhängenden Blechteilen letztere mit dem Werkzeug-Magazin verhaken.

Dabei ist es besonders vorteilhaft, daß die aufgesetzte Platte od. dgl. mittels einer Hub- und/oder einer Schwenk-Einstelleinrichtung am Werkzeug-Magazin gehalten und damit auf die jeweils geeignetste Hubhöhe oder Schwenklage einjustiert werden kann. Diese Einrichtung kann gegebenenfalls so weitergebildet sein, daß sie auch das Abnehmen der Platte und/oder ein Abrutschen der ausgestanzten Teile ermöglicht.

Die Erfindung wird nachstehend anhand der Zeichnung näher erläutert.

Die Zeichnung zeigt verschiedene Ausführungsformen der Erfindung. Hierbei stellen dar:

Fig. 1 teilweise in vertikaler Richtung geschnitten und abgebrochen eine Seitenansicht einer Stanzmaschine mit einer ersten Ausführungsform der Werkzeugwechselvorrichtung (Doppelmagazin),

Fig. 2 eine Vorderansicht der Fig. 2 in Pfeilrichtung A,

Fig. 3 eine Darstellung gemäß Fig. 1 einer zweiten Variante und

Fig. 4 eine Darstellung gemäß Fig. 1 einer dritten Ausführungsform (Doppelmagazin),

Fig. 5 einen Ausschnitt aus Fig. 1 bei um 180° gedrehtem Werkzeug-Magazin.

Die Stanzmaschine 1 ist von herkömmlicher Bauart, und sie besitzt einen oberen Auslegearm 2 sowie ein unteres Gestell 3. Im oberen Auslegearm befindet sich der Antrieb für den Stößel 4 mit der lediglich schematisch angedeuteten Werkzeugaufnahme 5 für den Stanzstempel 6. Diese wird in der Werkzeugaufnahme in bekannter Weise mittels einer automatischen, steuerbaren Verriegelungsvorrichtung 7 gehalten. Die zugehörige Matrize 8 wird mit Hilfe einer zweiten Verriegelungsvorrichtung 9 gehalten bzw. ebenso wie der Stanzstempel 6 zum Auswechseln freigegeben. Sie befindet sich im unteren Gestell 3 mit dem Werkzeugtisch 10. Auf diesem ist das zu stanzende Werkstück 11, insbesondere eine Blechplatte, in bekannter Weise in X- und/oder Y-Richtung verschiebbar, wobei diese Verschiebebewegungen vorzugsweise mit Hilfe eines Steuergeräts mit Programmsteuerung vorgenommen werden.

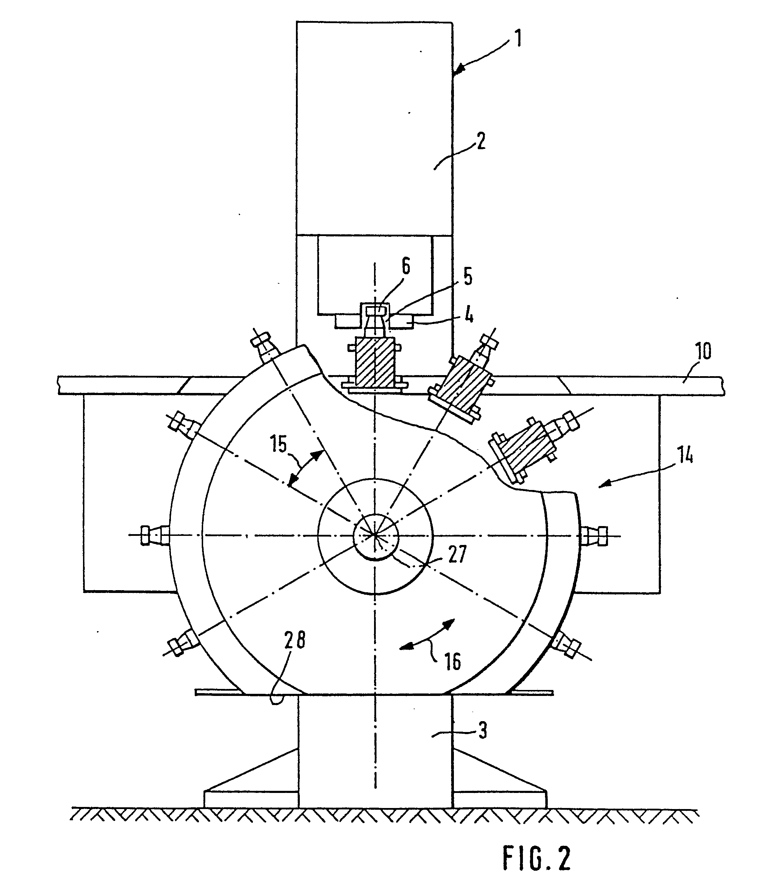

Derartige Bleche werden in der Regel mit unterschiedlichsten Stanzwerkzeugen 13 bearbeitet. Letztere können außer dem Stanzstempel und der Matrize auch noch einen Abstreifer umfassen. Dieser ist jedoch der Einfachheit halber weggelassen, was allerdings nicht einschränkend gemeint ist. Die verschiedenen, zum Einsatz kommenden Stanzwerkzeuge werden nach vorbestimmter Zeit und in vorgegebener Reihenfolge ausgewechselt. Dies geschieht unter Verwendung zweier Werkzeug-Magazine 17 und 18 oder eines Werkzeug-Doppelmagazins 14. Daran sind, wie insbesondere Fig. 2 der Zeichnung deutlich zeigt, die verschiedenen Werkzeuge insbesondere in gleichen Winkelabständen 15 gehalten. Um sie in die Auswechselposition bringen zu können, ist das Werkzeug-Doppelmagazin 14 bzw. sind die Werkzeug-Magazine 17 und 18 wenigstens in einer, vorzugsweise aber in zwei gegenläufigen Richtungen drehbar und in Wechselposition arretierbar, was durch den Doppelpfeil 16 in Fig. 2 symbolisiert ist. Im Falle der einzelnen Werkzeug-Magazine trägt das eine 17 sämtliche Stanzstempel 6, während am anderen 18 alle Matrizen 8 gehalten sind. Durch entsprechende Ausbildung dieser Magazine 17 und 18 erreicht man, daß im Magazin jeweils der Stanzstempel 6 eine koaxiale Lage zur zugehörigen Matrize 8 einnimmt, was, wie nachstehend noch erläutert wird, das Ein- und Auswechseln wesentlich erleichtert. Beim Doppelmagazin 14 ist dies ebenfalls der Fall und dadurch etwas einfacher zu erreichen, weil dort stirnseitig an den scheibenförmigen Magazinkörper entsprechende Doppelhalterungen angesetzt sind, während die Ausführungsform mit den Einzelmagazinen unterschiedlich lange Halterungen 19 und 20 erfordert.

Allen Magazin-Ausführungen ist gemeinsam, daß sie um eine bzw. eine gemeinsame horizontale geometrische Achse 27 drehbar sind. Außerdem befinden sich beide Magazine 17 und 18 bzw. das Doppelmagazin 14 entweder unterhalb oder oberhalb der Werkstückebene 21, welche quasi der Auflagefläche des Werkzeugtisches 10 entspricht. Bei den gezeichneten Ausführungsbeispielen sind beide Magazine bzw. das Doppelmagazin unterhalb dieser Werkstückebene gelegen, wobei allerdings das Magazin 17 für die Stanzstempel 6 bzw. der entsprechende äußere Randbereich des Doppelmagazins 14 die Werkstückebene 21 durchquert und damit geringfügig über diese hinausreicht. Dadurch ist es möglich, jeweils den Stanzstempel 6 und die Matrize 8 auf eine Höhenlage zu bringen, die im wesentlichen ihrer Höhenlage in der Werkzeugaufnahme beim Ein- und Auswechseln entspricht. Auf diese Weise kann die Übergabe vom Werkzeug-Magazin in die Maschinen-Aufnahme und umgekehrt in einfachster Weise, nämlich mittels einer geradlinigen Wechselbewegung erfolgen. Der Höhenabstand der beiden Werkzeugteile im Magazin einerseits bzw. in Ein- und Auswechselposition in der Stanzmaschine andererseits ist mit 22 bezeichnet.

Das Doppelmagazin 14 sitzt auf einer Welle 24 und kann mit Hilfe eines Elektromotors 25 unter Zwischenschaltung eines Getriebes 26 in beiden Drehrichtungen angetrieben werden, wobei der Motor vom Steuergerät 12 steuerbar ist. Die beiden Einzelmagazine 17 und 18 sitzen auf einer gemeinsamen Welle 24 und können demzufolge gleichzeitig und gleichschnell sowie in gleichem Drehsinne gedreht werden. Theoretisch ist es möglich, die Magazine 17 und 18 einzeln anzutreiben, also für jedes eine separate Welle mit Antrieb zu verwenden, jedoch bringt das im Normalfalle keinen Vorteil. Die geometrischen Achsen 27 der beiden Werkzeug-Magazine 17, 18 verlaufen koaxial, was sich dann zwangsläufig ergibt, wenn beide auf ein und derselben Antriebswelle 24 sitzen. Beim Doppelmagazin 14 ist selbstverständlich nur eine geometrische Achse vorhanden. Infolgedessen werden die Werkzeugteile bei einer 360°-Drehung der Welle auf einer Kreisbahn und bei einem geringeren Drehwinkel auf einer kreisbogenförmigen Bahn bewegt. Die Bewegungsbahn für die Stanzstempel 6 ist bei einer Stanzmaschine herkömmlicher Art größer als diejenige der Matrizen.

Das Doppelmagazin 14 bzw. das Magazin 17 mit der größeren Bewegungsbahn besitzt die Gestalt einer Kreisscheibe mit abgetrenntem Kreisabschnitt. Die Größe des Kreisabschnitts ist so gewählt, daß sich die geradlinige Begrenzung 28 bei paralleler Lage zur Werkstückebene 21 knapp unterhalb letzterer befindet oder etwa bündig mit dieser verläuft. Sinn und Zweck dieser Formgebung ist es, eine Drehlage für das Doppelmagazin bzw. das Magazin mit der größeren Bewegungsbahn zu schaffen, bei welcher es nicht über die Werkstückebene hinausragt. Dies ermöglicht ein Verschieben des Werkstücks 11 bzw. Bleches ohne jegliche Behinderung durch das Werkzeug-Magazin. Hierbei ist allerdings nicht an die in Fig. 2 zu sehende Drehlage des Werkzeugmagazins gedacht, sondern an eine hierzu um 180° gedrehte.

Aus dem Vorstehenden folgt, daß es vorteilhaft ist, wenn die Werkzeugwechselvorrichtung mit einer Vorrichtung zum gesteuerten Rückdrehen der Werkzeug-Magazine bzw. des Doppelmagazins nach dem Werkzeugwechsel in eine Ausgangsstellung ausgestattet ist, in welcher die geradlinige Begrenzung 28 des Werkzeug-Magazins 17 mit der größeren Bewegungsbahn bzw. des Doppelmagazins 14 der Werkstückebene 21 am nächsten ist und parallel dazu verläuft. Diese Aufgabe kann von dem bereits erwähnten Steuergerät 12 übernommen werden.

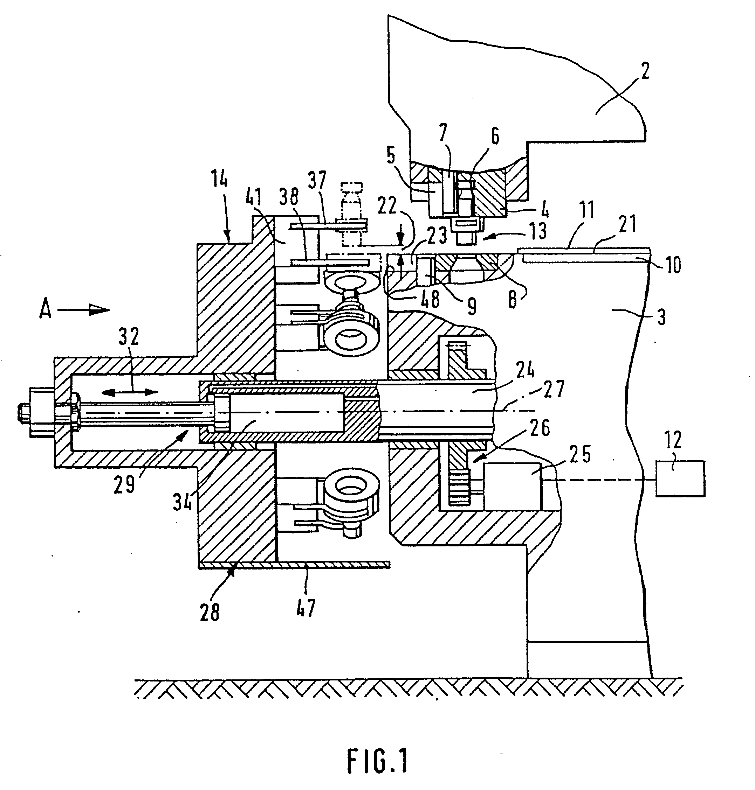

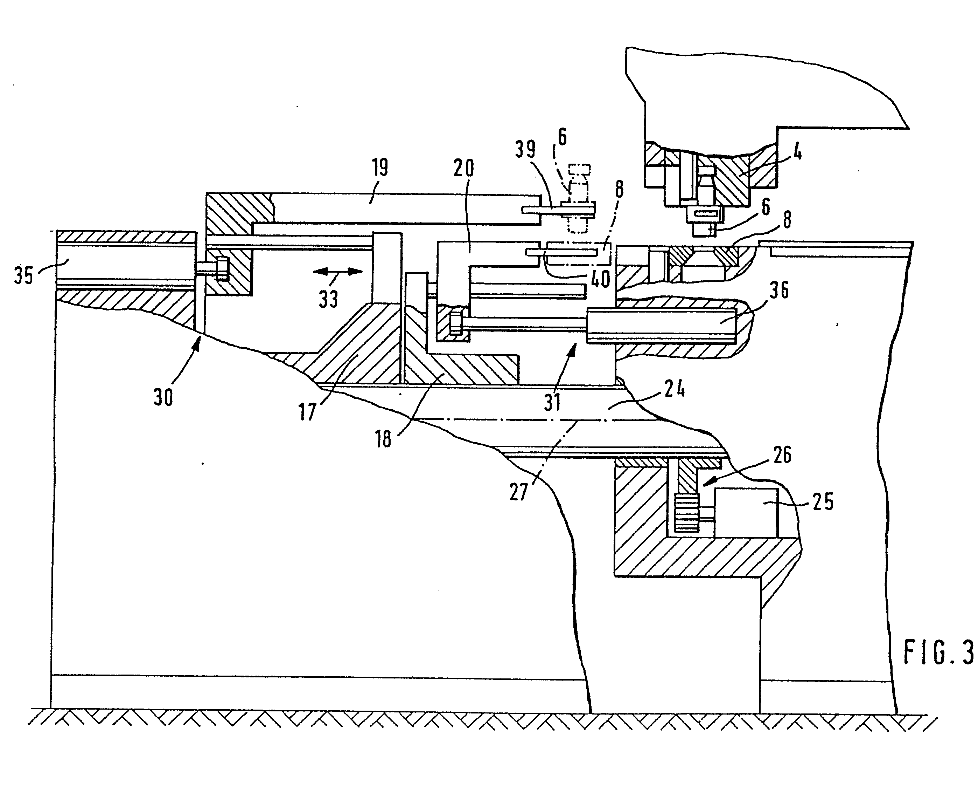

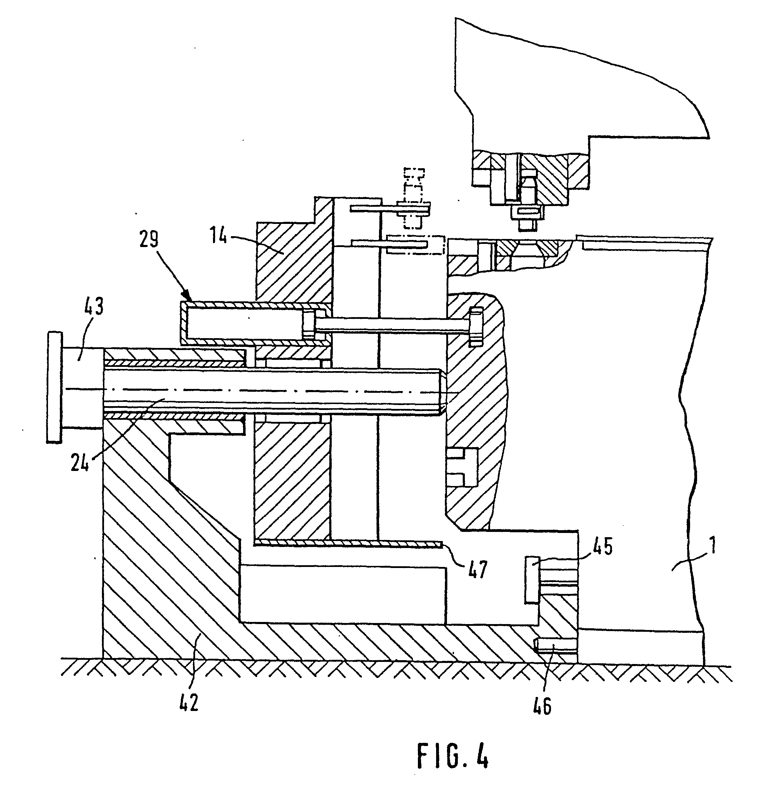

Das Stanzwerkzeug 13 wird mit Hilfe einer Übergabevorrichtung 29 (Fig. 1 und 4) bzw. 30 und 31 (Fig. 3) mit gerader Wechselbewegung 32 bzw. 33 vom Magazin 14; 17, 18 in die Werkzeugaufnahme 5 für den Stanzstempel 6 und 23 für die Matrize 8 übergeben bzw. umgekehrt von den Werkzeugaufnahmen 5, 23 nach vorheriger Entriegelung in das Magazin 14; 17, 18 gebracht. Wesentliche Bestandteile dieser Übergabevorrichtung sind ein bzw. je ein hydraulischer oder pneumatischer Arbeitszylinder 34 bzw. 35 und 36. Dabei werden vorzugsweise alle Teile eines Stanzwerkzeugs 13 gemeinsam bzw. gleichzeitig mittels eines Halters 37 und 38 bzw. 39 und 40 von der einen in die andere Verschiebeendstellung übergeben. Die Halter 37 und 38 befinden sich an der stirnseitig angesetzten Doppelhalterung 41 des Doppelmagazins 14 und können zu einer Einheit zusammengefaßt sein, während der Halter 39 der Halterung 19 und der Halter 40 der Halterung 20 der Magazine 17 bzw. 18 zugeordnet ist.

Zumindest das Werkzeug-Magazin 17 mit der größeren Bewegungsbahn, gegebenenfalls aber auch das Magazin 18 bzw. das Doppelmagazin 14, können auswechselbar ausgebildet sein. Zu diesem Zwecke befinden sich das Werkzeug-Magazin 17 und gegebenenfalls auch das Werkzeug-Magazin 18 bzw. das Doppelmagazin 14 an einer schieb- oder fahrbaren Vorrichtung 42 (Fig. 4). Daran ist die Welle 24 drehbar gelagert und ihr Antriebsmotor 43 befestigt. Das Verschieben der fahr- oder schiebbaren Vorrichtung 42 erfolgt mit Hilfe einer nicht gezeichneten Verschiebevorrichtung, wobei es sich vorteilhafterweise um einen hydraulischen oder pneumatischen Arbeitszylinder handeln kann. Zuvor ist allerdings das Lösen einer schematisch eingezeichneten Verbindungseinrichtung 45 notwendig, mit welcher die Vorrichtung 42 an der Stanzmaschine 1 gehalten ist. Fig. 4 zeigt außerdem noch schematisch eine Zentriereinrichtung 46. Nach dem Wegschieben der Vorrichtung 42 von der Stanzmaschine 1 kann das Doppelmagazin 14 bzw. das Magazin 17 und gegebenenfalls auch 18 von der Welle 24 abgezogen und durch ein anderes ersetzt werden.

Auf die geradlinige Begrenzung 28 des Doppelmagazins 14 bzw. des Magazins 17 mit der größeren Bewegungsbahn ist eine Platte 47, ein Gitter od.dgl. aufgesetzt. Seine Ebene erstreckt sich parallel zur geometrischen Drehachse 27 des Magazins. In der Ausgangsstellung des letzteren steht die Platte 47 in Verlängerung des Werkzeugtisches 10. Sie kann in nicht näher dargestellter Weise absenkbar ausgebildet werden. Hierbei ist an eine Absenkung auf das Niveau der Ebene 48 der unteren Werkzeugaufnahme 23 gedacht.

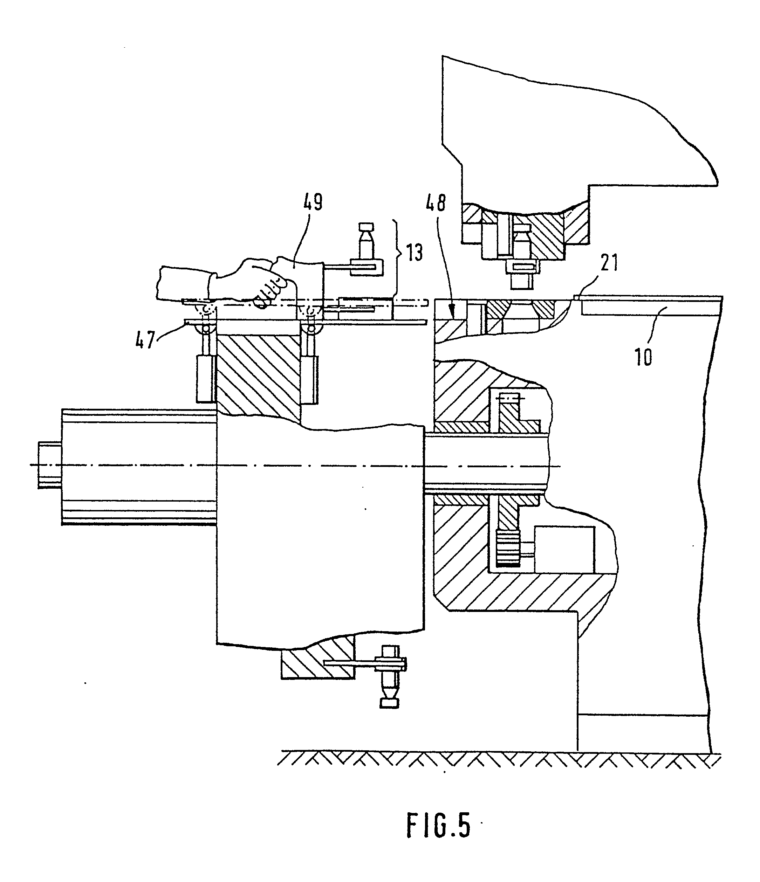

Die Platte 47 od.dgl. ist gemäß Fig. 5 höheneinstellbar und/oder gegenüber der Werkstückebene 21 vorzugsweise um eine zur Bildebene (Fig. 1) senkrechten Achse neigbar. Das Anheben und Absenken ermöglicht einerseits das Ausrichten der Platte 47 gegenüber dem Werkzeugtisch 10 und andererseits ein Absenken der freien Plattenoberfläche auf die Ebene 48. Im letzteren Falle kann man das Stanzwerkzeug 13 mit Hilfe einer Handkassette 49 entlang der Platte 47 verschieben und auf diese Weise in die Werkzeugaufnahme 5, 23 bringen. Das Auswechseln erfolgt dann anschließend mit der Wechselvorrichtung in das Werkzeug-Magazin 14 bzw. 17, 18. Damit kann man indirekt über eine Erstbenutzung in der Stanzmaschine ein Befüllen des Werkzeug-Magazins vornehmen.

Das Neigen der Platte 47 dient dazu, eine schräge, das Abrutschen von Abfall und/oder der ausgestanzten Teile ermöglichende Fläche zu schaffen.

**Patentansprüche**

1. Werkzeugwechselvorrichtung an einer Stanz- oder Nibbelmaschine (1) mit zwei drehbaren Magazinen zur Aufnahme jeweils wenigstens zweier wahlweise benutzbarer, gleichartiger Werkzeugteile und mit einer Übergabeeinrichtung zum Ein- und Auswechseln eines Werkzeugs in die bzw. aus der Werkzeugaufnahme der Maschine, wobei die Werkzeug-Magazine (17, 18) um horizontale geometrische Achsen (21) drehbar sind und wobei sich außerdem die beiden Werkzeugteile (6, 8) in ihrer Entnahmestellung in den Werkzeug-Magazinen (17, 18) in einem gegenseitigen Abstand (22) befinden, der etwa ihrem Höhenabstand in ihrer Auswechselstellung in der Werkzeugaufnahme (5, 23) der Maschine (1) entspricht, dadurch gekennzeichnet, daß der gegenseitige Abstand (22) der Werkzeugteile (6, 8) in ihrer Entnahmestellung ein Höhenabstand oder ein radialer Seitenabstand ist, daß sich beide Magazine (17, 18) oder ein dementsprechendes Doppelmagazin (14) entweder zumindest weitgehend unterhalb oder oberhalb der Werkstückebene befinden, wobei die geometrischen Achsen (27) der beiden Werkzeugmagazine (17, 18) koaxial verlaufen, und daß bei beiden Magazin-Ausführungsformen die kreis- oder kreisbogenförmige Bewegungsbahn für die einen Werkzeugteile (6) größer ist als diejenige für die anderen Werkzeugteile (8), wobei die größere Bewegungsbahn mit den jeweils zugehörigen Werkzeugteilen bzw. die Bewegungsbahn des äußeren Bereiches des Doppelmagazins die Werkstückebene (21) durchquert, und daß das Werkzeug-Magazin (17) mit der größeren Bewegungsbahn bzw. des Doppelmagazins (14) die Gestalt einer Kreisscheibe mit abgetrenntem Kreisabschnitt aufweist, wobei sich dessen geradlinige Begrenzung (28) bei paralleler Lage zur Werkstückebene (21) an derselben Seite der Werkstückebene befindet wie die geometrischen Achsen (27) der beiden Werkzeugmagazine (17, 18) bzw. die Achse des Doppelmagazins (14) oder bündig mit der Werkstückebene.

2. Vorrichtung nach Anspruch 1, dadurch gekennzeichnet, daß sich die Werkzeug-Magazine (17, 18) bzw. das Doppelmagazin (14) in Längsrichtung der Maschine vor letzterer befinden.

3. Vorrichtung nach Anspruch 1 oder 2, dadurch gekennzeichnet, daß die scheiben- oder radförmigen Werkzeug-Magazine (17, 18) eine gemeinsame Antriebswelle (24) aufweisen.

4. Vorrichtung nach wenigstens einem der vorhergehenden Ansprüche, dadurch gekennzeichnet, daß der Winkelabstand (15) benachbarter Werkzeugteile (6, 8) bei beiden Werkzeug-Magazinen (17, 18) bzw. beim Doppelmagazin (14) identisch ist.

5. Vorrichtung nach wenigstens einem der vorhergehenden Ansprüche, gekennzeichnet durch eine Vorrichtung zum gesteuerten Rückdrehen der Werkzeug-Magazine (17, 18) bzw. des Doppelmagazins (14) nach dem Werkzeugwechsel in eine Ausgangsstellung, in welcher die geradlinige Begrenzung (28) des Werkzeug-Magazins (17) mit der größeren Bewegungsbahn bzw. des Doppelmagazins (14) der Werkstückebene (21) am nächsten ist und parallel dazu verläuft.

6. Vorrichtung nach wenigstens einem der vorhergehenden Ansprüche, dadurch gekennzeichnet, daß die Übergabevorrichtung (29; 30, 31) eine geradlinige Wechselbewegung (32, 33) ausführt und sie insbesondere wenigstens einen hydraulischen oder pneumatischen Arbeitszylinder (34; 35, 36) aufweist.

7. Vorrichtung nach Anspruch 6, dadurch gekennzeichnet, daß alle Teile eines Stanzwerkzeugs (13) gemeinsam mittels eines bzw. je eines Halters (37, 38; 39, 40) der Übergabevorrichtung ein- und auswechselbar sind.

8. Vorrichtung nach wenigstens einem der vorhergehenden Ansprüche, dadurch gekennzeichnet, daß wenigstens das Werkzeug-Magazin (17) mit der größeren Bewegungsbahn auswechselbar ausgebildet ist.

9. Vorrichtung nach wenigstens einem der vorhergehenden Ansprüche, dadurch gekennzeichnet, daß wenigstens das Werkzeug-Magazin (17) mit der größeren Bewegungsbahn an einer schieb- oder fahrbaren Vorrichtung (42) drehbar montiert ist.

10. Vorrichtung nach wenigstens einem der vorhergehenden Ansprüche, dadurch gekennzeichnet, daß das Werkzeug-Magazin (18) mit der kleineren Bewegungsbahn in einer durch die durch die Arbeitsbewegung des Stanzstempels (6) definierte Gerade gelegte Vertikalebene drehbar und jedes Werkzeugteil (8) während des Stanzens daran gehalten ist.

11. Vorrichtung nach wenigstens einem der vorhergehenden Ansprüche wobei die geradlinige Begrenzung (28) bei paralleler Lage zur Werkstückebene (21) sich unterhalb letzterer befindet, dadurch gekennzeichnet, daß das Werkzeug-Magazin (17) bzw. das Doppelmagazin (14) mit der größeren Bewegungsbahn eine auf die geradlinige Begrenzung (28) aufgesetzte Platte (47), ein Gitter od.dgl. aufweist, deren Ebene sich parallel zur geometrischen Drehachse (27) des Werkzeug-Magazins (14; 17, 18) erstreckt und die in der Ausgangsstellung des Werkzeug-Magazins etwa in Verlängerung eines Werkzeugtisches (10) od.dgl. oder etwa in der Höhe der Matrizenauflage der Stanz- oder Nibbelmaschine (1) verläuft.

12. Vorrichtung nach Anspruch 11, dadurch gekennzeichnet, daß die aufgesetzte Platte (47) od.dgl. mittels einer Hub- und/oder Schwenk-Einstelleinrichtung am Werkzeug-Magazin (14; 17, 18) gehalten ist.

**Claims**

1. A tool changing device on a punching or nibbling machine (1) having two rotatable magazines to hold in each case at least two optionally usuable and similar tool parts and with a transfer means for the fitment of a tool into or the removal of the tool from the tool holder of the machine, the tool magazines (17, 18) being rotatable about horizontal geometrical axes (21), the two tool parts (6, 8) being furthermore disposed in their removal position in the tool magazines (17, 18) at a distance (22) from each other which corresponds substantially to their vertical distance in their exchange position in the tool holder (5, 23) of the machine (1), characterised in that the distance (22) between the tool parts (6, 8) in their removal position is a vertical distance of a radial lateral distance and in that both magazines (17, 18) or a corresponding dual magazine (14) is/are disposed either at least substantially below or above the workpiece plane, the geometrical axes (27) of the two tool magazines (17, 18) extending coaxially and in that in both embodiments of magazine, the circular or arcuate path of movement of one tool part (6) is greater than that of the other tool part (8), the greater path of movement with the associated tool parts or the path of movement of the outer portion of the dual magazine traversing the workpiece plane (21) and in that the tool magazine (17) with the greater path of movement or of the dual magazine (14) takes the form of a circular disc with a portion of the circle separated off, its rectilinear boundary (28), when in a position parallel with the workpiece plane (21), being disposed at the same side of the workpiece plane as the geometrical axes (27) of the two tool magazines (17, 18) or the axis of the dual magazine (14) or extending flush with the workpiece plane.

2. A device according to Claim 1, characterised in that the tool magazines (17, 18) or the dual magazine (14) are disposed in front of the machine and in the longitudinal direction thereof.

3. A device according to Claim 1 or 2, characterised in that the disc or wheel-shaped tool magazines (17, 18) have one common drive shaft (24).

4. A device according to at least one of the preceding Claims, characterised in that the angular distance (15) between adjacent tool parts (6, 8) is identical in both tool magazines (17, 18) or in the dual magazine (14).

5. A device according to at least one of the preceding Claims, characterised by a device for the controlled retro-rotation of the tool magazines (17, 18) or of the dual magazine (14) after the tool change, to restore a starting position in which the rectilinear boundary (28) of the tool magazine (17) with the greater path of movement or of the dual magazine (14) comes closest to and extends parallel with the workpiece plane (21).

6. A device according to at least one of the preceding Claims, characterised in that the transfer device (29, 30, 31) performs a rectilinear alternating movement (32, 33) and has in particular at least one hydraulic or pneumatic working cylinder (34, 35, 36).

7. A device according to Claim 6, characterised in that all parts of a punching tool (13) can be jointly exchanged by being fitted and removed by means of a or a respective holder (37, 38, 39, 40) of the transfer device.

8. A device according to at least one of the preceding Claims, characterised in that at least a tool magazine (17) with the greater path of movement is constructed to be exchangeable.

9. A device according to at least one of the preceding Claims, characterised in that at least the tool magazine (17) with the greater path of movement is rotatably mounted on a device (42) which can be pushed or propelled.

10. A device according to at least one of the preceding Claims, characterised in that the tool magazine (18) with the smaller path of movement is rotatable in a vertical plane extending through the straight line defined by the working movement of the punching die (6), each tool part (8) being held thereon during punching.

11. A device according to at least one of the preceding Claims, in which the rectilinear boundary (28), when situated parallel with the workpiece plane (21), is disposed underneath this latter, characterised in that the tool magazine (17) or the dual magazine (14) having the greater path of movement comprises, mounted on the rectilinear boundary (28), a plate (47), a grid or the like, the plane of which extends parallel with the geometrical axis (27) of rotation of the tool magazine (14, 17, 18) and which, in the starting position of the tool magazine, extends substantially in a prolongation of a work table (10) of the like or substantially at the height of the female die support of the punching or nibbling machine (1).

12. A device according to Claim 11, characterised in that the plate (47) or the like which is mounted thereon is supported on the tool magazine (14, 17, 18) by means of a lifting and/or pivoting setting means.

**Revendications**

1. Dispositif de changement d'outil sur une presse à découper ou un grugeoir (1) comprenant deux magasins tournants pour recevoir à chaque fois au moins deux parties d'outil similaires et utilisables au choix, et comprenant un dispositif de transfert pour poser un outil dans le porte-outil de la machine et l'en enlever, respectivement, les magasins à outils (17, 18) pouvant tourner autour d'axes géométriques horizontaux (27), et les deux parties d'outil (6, 8) se trouvant, en outre, dans leur position d'enlèvement hors des magasins à outils (17, 18), à une distance entre elles (22) qui correspond à peu près à leur distance en hauteur dans leur position d'échange dans le porte-outil (5, 23) de la machine (1), caractérisé par le fait que la distance entre elles (22) des pièces d'outil (6, 8) dans leur position d'enlèvement est une distance en hauteur ou une distance latérale radiale, par le fait que les deux magasins (17, 18), ou un magasin double (14) qui leur correspond, se trouvent, soit au moins largement au-dessous du plan de la pièce, soit au-dessus de lui, les axes géométriques (27) des deux magasins à outils (17, 18) s'étendant coaxialement, par le fait que, dans les deux formes de réalisation des magasins, la trajectoire circulaire ou en arc de cercle de l'une des parties d'outil (6) est plus importante que celle de l'autre (8), cependant que la plus grande trajectoire avec les parties d'outil à chaque fois associées, ou, respectivement, la trajectoire de la région extérieure du magasin double, traverse le plan (21) de la pièce, et par le fait que le magasin à outils (17) dont la trajectoire est la plus grande ou, respectivement, le magasin double (14), présente la forme d'un disque circulaire dont un segment circulaire est enlevé, la limite rectiligne (28) de celui-ci se trouvant, dans la position parallèle au plan (21) de la pièce, du même côté du plan de la pièce que les axes géométriques (27) des deux magasins à outils (17, 18) ou, respectivement, que l'axe du magasin double (14), ou s'étend de niveau avec le plan de la pièce.

2. Dispositif selon la revendication 1, caractérisé par le fait que les magasins à outils (17, 18) ou, respectivement, le magasin double (14), se trouvent devant la machine dans la direction longitudinale de cette dernière.

3. Dispositif selon la revendication 1 ou 2, caractérisé par le fait que les magasins à outils (17, 18) en forme de disques ou de roues présentent un arbre d'entraînement commun (24).

4. Dispositif selon l'une au moins des revendications précédentes, caractérisé par le fait que la distance angulaire (15) entre les parties d'outil voisines (6, 8) est identique dans les deux magasins à outils (17, 18) ou, respectivement, dans le magasin double (14).

5. Dispositif selon l'une au moins des revendications précédentes, caractérisé par un dispositif pour la rotation commandée en sens inverse des magasins à outils (17, 18) ou, respectivement, du magasin double (14), après l'échange des outils, jusqu'à une position de départ dans laquelle la limite rectiligne (28) du magasin à outils (17) dont la trajectoire est la plus grande ou, respectivement, du magasin double (14), est la plus proche du plan (21) de la pièce et s'étend parallèlement à celui-ci.

6. Dispositif selon l'une au moins des revendications précédentes, caractérisé par le fait que le dispositif de transfert (29, 30, 31) exécute un déplacement rectiligne en va-et-vient (32, 33), et qu'il comporte, en particulier, au moins un vérin hydraulique ou pneumatique (34; 35, 36).

7. Dispositif selon la revendication 6, caractérisé par le fait que toutes les parties d'un outil de découpage (13) peuvent être posées et déposées ensemble au moyen d'un porte-outil, ou d'un porte-outil à chaque fois, respectivement, (37, 38; 39, 40), du dispositif de transfert.

8. Dispositif selon l'une au moins des revendications précédentes, caractérisé par le fait qu'au moins le magasin à outils (17) dont la trajectoire est la plus grande est réalisé de manière interchangeable.

9. Dispositif selon l'une au moins des revendications précédentes, caractérisé par le fait qu'au moins le magasin à outils (17) dont la trajectoire est la plus grande est monté tournant sur un dispositif coulissant ou roulant (42).

10. Dispositif selon l'une au moins des revendications précédentes, caractérisé par le fait que le magasin à outils (18) dont la trajectoire est la plus petite peut tourner dans un plan vertical passant par la droite définie par le déplacement de travail du poinçon de découpage (6), et que chaque partie d'outil (8) y est maintenue au cours du découpage.

11. Dispositif selon l'une au moins des revendications précédentes, où la limite rectiligne (28), lorsqu'elle est parallèle au plan (21) de la pièce, se trouve au-dessous de celui-ci, caractérisé par le fait que le magasin à outils (17) dont la trajectoire est la plus grande ou, respectivement, le magasin double (14), comporte une plaque (47), une grille ou similaire qui est posée sur la limite rectiligne (28), dont le plan s'étend parallèlement à l'axe géométrique de rotation (27) du magasin à outils (14; 17, 18), et qui, dans la position de départ du magasin à outils, s'étend à peu près dans le prolongement d'une table (10) ou similaire destinée aux pièces, ou à peu près à la hauteur de l'appui de la matrice de la presse à découper ou du grugeoir (1).

12. Dispositif selon la revendication 11, caractérisé par le fait que la plaque posée (47) ou similaire est maintenue sur le magasin à outils (14; 17, 18) au moyen d'un dispositif de réglage élévateur et/ou pivotant.

**FIG.1**

FIG. 2

11

FIG.3

FIG. 4

FIG.5